# EUROPÄISCHE PATENTSCHRIFT

(11) **EP 0 859 712 B1**
(45) Veröffentlichungstag und Bekanntmachung des Hinweises auf die Patenterteilung: **29.11.2000**
(21) Anmeldenummer: 97930323.7
(22) Anmeldetag: 09.06.1997
(51) Int. Cl.: B60T 8/24

(54) **VERFAHREN UND VORRICHTUNG ZUR REGELUNG EINER DIE FAHRZEUGBEWEGUNG REPRÄSENTIERENDEN BEWEGUNGSGRÖSSE**
METHOD AND DEVICE FOR ADJUSTING AN AMOUNT OF MOVEMENT REPRESENTING THE VEHICLE MOTION
PROCEDE ET DISPOSITIF DE REGULATION D'UNE QUANTITE DE MOUVEMENT REPRESENTANT LE MOUVEMENT DU VEHICULE

(30) Priorität: 24.09.1996 DE 19639092; 03.03.1997 DE 19708508
(43) Veröffentlichungstag der Anmeldung: 26.08.1998
(73) Patentinhaber: ROBERT BOSCH GMBH, 70442 Stuttgart (DE)
(72) Erfinder: VAN ZANTEN, Anton, D-71254 Ditzingen (DE); EHRET, Thomas, D-71696 Möglingen (DE)
(86) Internationale Anmeldenummer: DE9701215
(87) Internationale Veröffentlichungsnummer: WO9813240

(56) Entgegenhaltungen:
- EP-A- 0 330 149

## Beschreibung

### Stand der Technik

Die unter dem Aktenzeichen 196 15 311.5 beim Deutschen Patentamt eingereichte Anmeldung beschreibt ein Verfahren bzw. eine Vorrichtung zur Regelung einer die Fahrzeugbewegung repräsentierenden Bewegungsgröße, bei dem bzw. bei der eine von der Fahrbahnquerneigung abhängige Querbeschleunigungskomponente bestimmt wird. Diese Querbeschleunigungskomponente wird zur Korrektur der gemessenen Querbeschleunigung des Fahrzeugs verwendet.

Die Bestimmung der von der Fahrbahnquerneigung abhängigen Querbeschleunigungskomponente wird in einem durch die Gierrate und die Querbeschleunigung des Fahrzeugs beschriebenen stabilen Zustand des Fahrzeugs vorgenommen. Zur Bestimmung des stabilen Zustands des Fahrzeugs wird vorgeschlagen, einen kurzen, aktiven, vom Ablauf der Regelung unabhängigen Eingriff durch das Regelungssystem durchführen zu lassen, mit dem die Gierrate des Fahrzeugs geringfügig beeinflußt wird. Der stabile Zustand des Fahrzeugs liegt dann vor, wenn aufgrund der gewollten Änderung der Gierrate des Fahrzeugs eine Änderung der Querbeschleunigung des Fahrzeugs feststellbar ist. Liegt der stabile Zustand des Fahrzeugs vor, dann wird die von der Fahrbahnquerneigung abhängige Querbeschleunigungskomponente ausgehend von den in diesem Zustand ermittelten Werten für die Fahrzeuglängsgeschwindigkeit, die Querbeschleunigung des Fahrzeugs sowie die Gierrate des Fahrzeugs bestimmt.

Systeme zur Regelung der Fahrdynamik eines Fahrzeugs sind beispielsweise aus der in der Automobiltechnischen Zeitschrift (ATZ) 96, 1994, Heft 11, auf den Seiten 674 bis 689 erschienenen Veröffentlichung "FDR - die Fahrdynamikregelung von Bosch" bekannt. Gleichzeitig zeigt diese Veröffentlichung, daß im Fahrdynamikregler verschiedene Sondersituationen, wie zum Beispiel eine geneigte Fahrbahn, in der Regelung mitberücksichtigt werden.

Die Aufgabe der vorliegenden Erfindung besteht darin, die Ermittlung der von der Fahrbahnquerneigung abhängigen Querbeschleunigungskomponente zu verbessern.

Diese Aufgabe wird durch die Merkmale des Anspruchs 1 bzw. durch die des Anspruchs 10 gelöst.

### Vorteile der Erfindung

Ein wesentlicher Vorteil der Erfindung gegenübei dem eingangs genannten Stand der Technik ist der, daß bei der erfindungsgemäßen Vorrichtung, bzw. bei dem erfindungsgemäßen Verfahren zur Bestimmung der von der Fahrbahnquerneigung abhängigen Querbeschleunigungskomponente keine kurzen, aktiven, vom Ablauf der Regelung unabhängigen Eingriffe durch das Regelungssystem erforderlich sind, mit denen die Gierrate des Fahrzeugs geringfügig beeinflußt werden.

Um ohne diese Eingriffe auskommen zu können, wird der an der Hinterachse des Fahrzeugs auftretende Schräglaufwinkel ermittelt. In Abhängigkeit dieses ermittelten Schräglaufwinkels wird ein Fahrzeugzustand festgestellt, bei dem die von der Fahrbahnquerneigung abhängige Querbeschleunigungskomponente wenigstens in Abhängigkeit der ermittelten Werte für die Gierrate des Fahrzeugs, die Querbeschleunigung des Fahrzeugs sowie die Längsgeschwindigkeit des Fahrzeugs ermittelt wird. Die so ermittelte Querbeschleunigungskomponente wird auf Plausibilität überprüft und vorzugsweise zur Korrektur der Querbeschleunigung des Fahrzeugs verwendet. Ferner kann sie beispielsweise auch zur Korrektur der Gierrate des Fahrzeugs oder auch zur Korrektur des an der Hinterachse des Fahrzeugs auftretenden Schräglaufwinkels verwendet werden.

Für die Ermittlung des an der Hinterachse des Fahrzeugs auftretenden Schräglaufwinkels hat es sich als vorteilhaft erwiesen, diesen in Abhängigkeit eines Wertes für den Schwimmwinkel des Fahrzeugs, sowie der ermittelten Werte für die Gierrate des Fahrzeugs und die Längsgeschwindigkeit des Fahrzeugs zu ermitteln. Dabei wird der Schwimmwinkel wenigstens ausgehend von den ermittelten Werten für die Gierrate des Fahrzeugs, die Querbeschleunigung des Fahrzeugs sowie die Längsgeschwindigkeit des Fahrzeugs ermittelt. Gleichzeitig ist es bei der Ermittlung des Schwimmwinkels zusätzlich von Vorteil, fahrerunabhängig durchgeführte Eingriffe an den Aktuatoren mitzuberücksichtigen. Beispielsweise können hierfür die fahrerunabhängig durchgeführten Betätigungen der Aktuatoren, mit denen radindividuell Bremsmomente beeinflußbar sind, erfaßt werden.

In Abhängigkeit des ermittelten Schräglaufwinkels wird der Fahrzeugzustand, bei dem die von der Fahrbahnquerneigung abhängige Querbeschleunigungskomponente ermittelt wird, vorzugsweise durch einen Vergleich des ermittelten Schräglaufwinkels mit einem vorgegebenen Schwellwert festgestellt. Beispielsweise ist es ein Anzeichen dafür, daß der zu erfassende Fahrzeugzustand dann vorliegt, wenn der Wert des ermittelten Schräglaufwinkels größer als der Schwellwert ist.

Bei dem festzustellenden Fahrzeugzustand handelt es sich um einen solchen, der bei einer stabilen Fahrt des Fahrzeugs auf einer quergeneigten Fahrbahn, insbesondere bei einer stabilen Fahrt in einer Steilwand bzw. Steilkurve, auftritt. Wird bei einer solchen Fahrt der Schräglaufwinkel ausgehend von der mit Hilfe eines Sensors ermittelten Querbeschleunigung ermittelt, so nimmt der Schräglaufwinkel große Werte an. Der Grund hierfür ist der, daß die gemessene, nicht korrigierte Querbeschleunigung durch die von der Fahrbahnquerneigung abhängige Querbeschleunigungskomponente verfälscht ist. Ebenso ist auch ein instabiler Fahrzustand des Fahrzeugs, wie er zum Beispiel beim Schleudern des Fahrzeugs vorliegt, dadurch gekennzeichnet, daß der an der Hinterachse des Fahrzeugs auftretende Schräglaufwinkel große Werte annimmt. Dies hängt in diesem Fall allerdings mit den physikalischen Gegebenheiten, wie sie bei einem Schleudervorgang vorliegen, zusammen. Folglich ist für die eindeutige Bestimmung des festzustellenden Fahrzeugzustandes ein weiteres Kriterium erforderlich.

Hierzu bietet sich in vorteilhafter Weise die Ermittlung der Fahrerreaktion, das heißt die Ermittlung der vom Fahrer durchgeführten Eingriffe an. Beispielsweise können hierzu die Aktuatoren, mit denen die auf die einzelnen Räder des Fahrzeugs wirkenden Bremsmomente beeinflußbar sind, überwacht werden. Ebenfalls bietet sich eine Überwachung des vom Fahrer eingestellten Lenkwinkels an. In Abhängigkeit dieser Überwachung liegt der Fahrzeugzustand dann vor, wenn zusätzlich zu dem vom Schräglaufwinkel hergeleiteten Kriterium, wenigstens die vom Fahrer erzeugten Bremsmomente kleiner als ein vorgegebener Schwellwert sind bzw. der Gradient des Lenkwinkels kleiner als ein vorgegebener Schwellwert ist.

Um den ermittelten Wert der Querbeschleunigungskomponente auf Plausibilität hin überprüfen zu können, bietet sich vorteilhafterweise solch ein Vergleich an, bei dem mittels Differenzbildung ein erster Wert für die Gierrate des Fahrzeugs, der ausgehend von der ermittelten Querbeschleunigungskomponente ermittelt wird, mit einem zweiten Wert für die Gierrate des Fahrzeuges, der mit Hilfe eines Drehratensensors ermittelt wird, verglichen wird. Ergibt sich bei diesem Vergleich, daß der Wert für die Querbeschleunigungskomponente plausibel ist, so wird dieser Wert zur Korrektur wenigstens der Querbeschleunigung des Fahrzeugs verwendet.

Weitere Vorteile sowie vorteilhafte Ausgestaltungen können den Unteransprüchen, der Zeichnung sowie der Beschreibung des Ausführungsbeispiels entnommen werden.

### Zeichnung

Die Zeichnung besteht aus den Figuren 1 bis 4. Figur 1 zeigt beispielhaft ein Fahrzeug, welches mit einem System zur Regelung der Fahrdynamik ausgestattet ist. In Figur 2 ist zum einen die in einem System zur Regelung der Fahrdynamik eines Fahrzeugs verwendete Sensorik bzw. Aktuatorik und zum anderen eine Strukturierung des in diesem System verwendeten Steuergerätes, unter Berücksichtigung der erfindungsgemäßen Vorrichtung, dargestellt. In Figur 3 ist mit Hilfe eines Flußdiagrammes das in der erfindungsgemäßen Vorrichtung ablaufende erfindungsgemäße Verfahren zur Ermittlung der von der Fahrbahnquerneigung abhängigen Querbeschleunigungskomponente bzw. zur Korrektur wenigstens der Querbeschleunigung des Fahrzeugs dargestellt. Figur 4 zeigt mit Hilfe eines Flußdiagrammes eine Abfrage, mit der festgestellt werden kann, ob eine Steilwandbedingung erfüllt ist oder nicht.

Es sei darauf hingewiesen, daß Blöcke mit derselben Bezeichnung in unterschiedlichen Figuren dieselbe Funktion haben.

### Ausführungsbeispiel

Die Erfindung geht von einem Regelungssystem aus, mit dem das Fahrzeugverhalten beeinflußt werden kann. Insbesondere geht die Erfindung von einem System zur Regelung der Fahrdynamik eines Fahrzeugs aus. Dies soll allerdings keine Einschränkung darstellen. Beispielsweise kann die erfindungsgemäße Vorrichtung bzw. das erfindungsgemäße Verfahren auch in einem Antiblockierregelsystem oder in einem Antriebsschlupfregelsystem eingesetzt werden, sofern diese Systeme mit der entsprechenden Sensorik ausgestattet sind.

Einleitend soll zunächst auf die sich ergebende Problematik bei der Verwendung der mit Hilfe eines Querbeschleunigungssensors ermittelten Querbeschleunigung in Regelungssystemen hingewiesen werden.

Die Messung der Querbeschleunigung mit Hilfe eines Querbeschleunigungssensors findet in einem Inertialsystem statt. Somit gehen in den Wert der gemessenen Querbeschleunigung neben den Querkräften, die am Fahrzeug aufgrund der Fahrzeugbewegung angreifen, auch die Kräfte ein, die durch eine quergeneigte Fahrbahn verursacht werden. Dagegen liegen den in den oben erwähnten Regelungssystemen implementierten Regelverfahren, zur Berechnung von benötigten Größen für gewöhnlich fahrbahnfeste Koordinatensysteme zugrunde. Solche fahrbahnfesten Koordinatensysteme haben die Eigenschaft, daß in ihnen die Fahrbahn keine Querneigung aufweist, und die darin verwendete Querbeschleunigung folglich auch keine Anteile aufweist, die durch eine Querneigung der Fahrbahn hervorgerufen werden. Aufgrund dieser Situation - gemessene Querbeschleunigung in einem Inertialsystem und benötigte Querbeschleunigung in einem fahrbahnfesten Koordinatensystem - würde man einen Fehler machen, wenn man die in einem Inertialsystem gemessene Querbeschleunigung direkt, ohne Korrektur, in einem fahrbahnfesten Koordinatensystem verwenden würde.

Mit Hilfe der erfindungsgemäßen Vorrichtung bzw. dem erfindungsgemäßen Verfahren wird die von der Fahrbahnquerneigung abhängige Querbeschleunigungskomponente ermittelt, wodurch eine Korrektur wenigstens der gemessenen Querbeschleunigung des Fahrzeugs möglich ist.

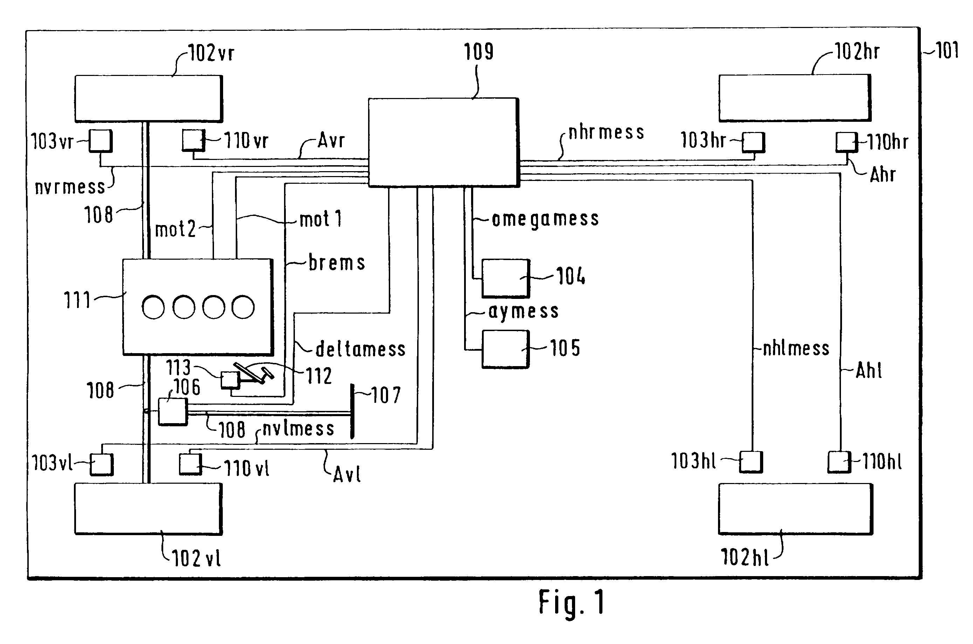

In Figur 1 ist ein Fahrzeug 101 mit Rädern 102vr, 102vl, 102hr bzw. 102hl dargestellt. Nachfolgend wird für die Räder des Fahrzeugs die vereinfachende Schreibweise 102ij eingeführt. Dabei gibt der Index i an, ob sich das Rad an der Hinterachse (h) oder an der Vorderachse (v) befindet. Der Index j zeigt die Zuordnung zur rechten (r) bzw. zur linken (1) Fahrzeugseite an. Diese Kennzeichnung durch die beiden Indizes i bzw. j ist für sämtliche Größen bzw. Komponenten, bei denen sie Verwendung findet, entsprechend.

Jedem Rad 102ij ist ein Raddrehzahlsensor 103ij zugewiesen. Das vom jeweiligen Raddrehzahlsensor 103ij erzeugte Signal nijmess wird dem Steuergerät 109 zugeführt. Neben den Raddrehzahlsensoren 103ij sind im Fahrzeug 101 weitere Sensoren vorhanden. Hierbei handelt es sich um einen Drehraten- bzw. Gierratensensor 104, dessen Signal omegamess ebenfalls dem Steuergerät 109 zugeführt wird. Des weiteren handelt es sich um einen Querbeschleunigungssensor 105. Das von ihm erzeugte Signal aymess wird ebenfalls dem Steuergerät 109 zugeführt. Zusätzlich ist im Fahrzeug ein Lenkwinkelsensor 106 enthalten, mit dem der vom Fahrer über das Lenkrad 107 und das Lenkgestänge 108 an den Vorderrädern eingestellte Lenkwinkel erfaßt wird. Das vom Lenkwinkelsensor 106 erfaßte Signal deltamess wird dem Steuergerät 109 zugeführt. Vom Motor 111 werden dem Steuergerät 109 aktuelle Motorkenndaten mot1, wie beispielsweise Motordrehzahl und/oder Drosselklappenventilstellung und/oder Zündwinkel zugeführt. Ferner erhält das Steuergerät 109 von einem dem Bremspedal 112 zugeordneten Erfassungsmittel 113 ein Signal brems, mit dem dem Steuergerät 109 ein vom Fahrer durchgeführter Bremseneingriff angezeigt wird. Beispielsweise kann für das Erfassungsmittel 113 ein Schalter eingesetzt werden.

Im Steuergerät 109 werden die ihm zugeführten Signale verarbeitet bzw. ausgewertet und entsprechend der Regelung der Fahrdynamik des Fahrzeugs Stellsignale ausgegeben. Es ist denkbar, daß das Steuergerät 109 Stellsignale Aij erzeugt, mit denen den Rädern 102ij zugeordnete Aktuatoren 110ij, welche vorzugsweise Bremsen darstellen, beeinflußt werden können. Außerdem ist die Ausgabe eines Stellsignals mot2 denkbar, mit dem das vom Motor 111 abgegebene Antriebsmoment beeinflußbar ist.

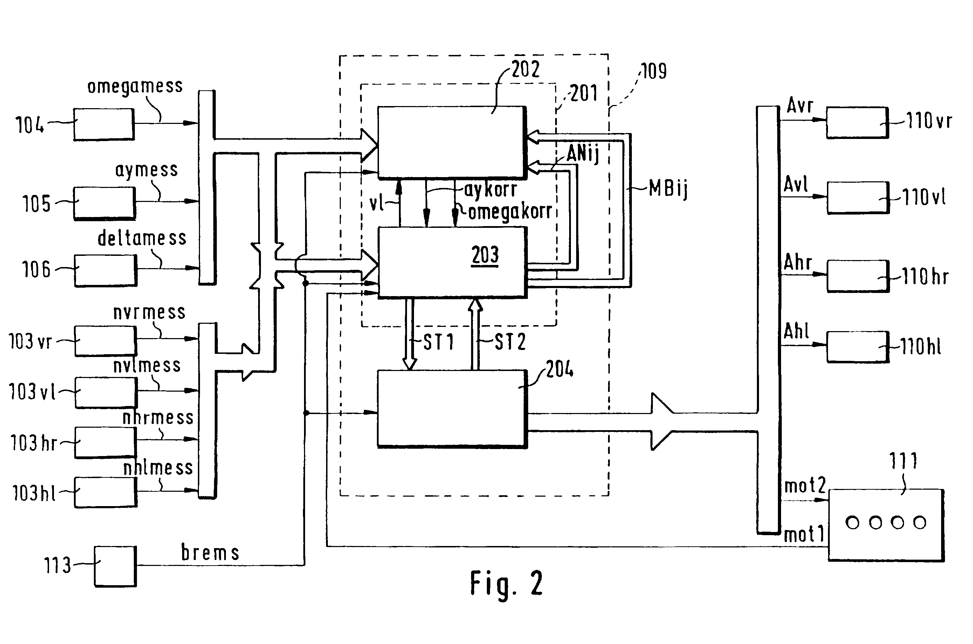

In Figur 2 ist der für die erfindungsgemäße Vorrichtung bzw. der für das erfindungsgemäße Verfahren relevante Aufbau des Steuergerätes 109 dargestellt. Im wesentlichen besteht das Steuergerät 109 aus einem Regler 201 und einer Ansteuereinrichtung 204 für die Aktuatoren 110ij und den Motor 111.

Der Regler 201 wiederum besteht aus zwei Komponenten. Zum einen enthält er ein Mittel 202, mit dem eine von der Fahrbahnquerneigung abhängige Querbeschleunigungskomponente wenigstens ermittelt und mit dem eine Korrektur wenigstens der mit dem Sensor 105 erfaßten Querbeschleunigung aymess des Fahrzeugs durchgeführt wird. Zum anderen enthält der Regler 201 einen Reglerkern 203, in dem beispielsweise ein für die Fahrdynamikregelung erforderliches Regelungskonzept abgearbeitet wird.

Die mit den Sensoren 104, 105 bzw. 106 erfaßten Signale, die die Fahrzeugbewegung beschreibende Größen repräsentieren, werden dem Mittel 202 zugeführt. Gleichzeitig werden diese Signale zusammen mit den mit den Raddrehzahlsensoren 103ij erfaßten Signale nijmess, welche die Radgeschwindigkeiten repräsentieren, dem Block 203 zugeführt. Das mit dem Erfassungsmittel 113 erzeugte Signal brems, welches die Betätigung des Bremspedals durch den Fahrer beschreibt, wird den Blöcken 202, 203 und 204 zugeführt. Zusätzlich werden dem Block 203 die aktuellen Motorkenndaten motl zugeführt.

Wenigstens in Abhängigkeit der Radgeschwindigkeiten nijmess wird im Block 203 in bekannter Weise eine die Längsgeschwindigkeit des Fahrzeugs repräsentierende Größe vl ermittelt. Neben der Verwendung der Radgeschwindigkeiten ist bei der Ermittlung der Längsgeschwindigkeit vl auch eine Berücksichtigung der Gierrate bzw. Querbeschleunigung des Fahrzeugs denkbar. Zum einen wird die ermittelte Längsgeschwindigkeit vl intern im Reglerkern 203 verarbeitet. Zum anderen wird die Längsgeschwindigkeit vl dem Block 202 zugeführt.

Zusätzlich zu der Längsgeschwindigkeit vl werden dem Block 202 Signale MBij zugeführt, die im Reglerkern 203 ermittelt werden, und die die auf die einzelnen Räder wirkenden und von den Aktuatoren 110ij erzeugten Bremsmomente repräsentieren. Zum anderen erhält der Block 202 Signale ANij, die ebenfalls im Block 203 ermittelt werden, und mit denen beispielsweise die Anzahl der, an den Aktuatoren 110ij für die Regelung der die Fahrzeugbewegung repräsentierenden Größe, fahrerunabhängig durchgeführten Eingriffe erfaßt werden.

In Abhängigkeit der dem Block 202 zugeführten Signale wird ein Fahrzeugzustand festgestellt, bei dem eine von der Fahrbahnquerneigung abhängige Querbeschleunigungskomponente ermittelt wird. Nach ihrer Ermittlung wird die Querbeschleunigungskomponente auf Plausibilität hin überprüft. Wenn bei der Überprüfung festgestellt wird, daß die Querbeschleunigungskomponente plausibel ist, wird diese zur Korrektur wenigstens der mit dem Sensor 105 erfaßten Querbeschleunigung aymess des Fahrzeugs verwendet. Neben der Korrektur der Querbeschleunigung ist auch eine Korrektur der mit Hilfe des Sensors 104 erfaßten Gierrate omegamess des Fahrzeugs denkbar.

Ist die von der Fahrbahnquerneigung abhängige Querbeschleunigungskomponente plausibel, so werden dem Block 203, ausgehend vom Block 202, folglich die korrigierte Querbeschleunigung aykorr sowie die korrigierte Gierrate omegakorr zugeführt. Somit können bei der im Reglerkern 203 ablaufenden Regelung der die Fahrzeugbewegung repräsentierenden Bewegungsgröße, die korrigierten Werte für die Querbeschleunigung bzw. die Gierrate des Fahrzeugs verwendet werden.

Wird dagegen bei der im Block 202 stattfindenden Überprüfung festgestellt, daß die Querbeschleunigungskomponente nicht plausibel ist, so wird in ihm keine Korrektur der Querbeschleunigung bzw. der Gierrate des Fahrzeugs vorgenommen. Folglich werden für diese beiden Größen auch keine korrigierten Werte an den Block 203 ausgegeben. Die im Block 203 stattfindende Regelung wird basierend auf den mit den Sensoren erfaßten Größen durchgeführt.

Bei dem im Reglerkern 203 implementierten Regelungskonzept kann es sich beispielsweise um eines zur Regelung der Fahrdynamik des Fahrzeugs handeln, wie es beispielsweise aus der in der Automobiltechnischen Zeitschrift (ATZ) 96, 1994, Heft 11, auf den Seiten 674 bis 689 erschienenen Veröffentlichung "FDR - die Fahrdynamikregelung von Bosch" bekannt ist.

Dem Reglerkern 203 werden hierzu wenigstens folgende Signale bzw. Größen zugeführt: Die mit den Sensoren 103ij, 104, 105 sowie 106 erfaßten, die Fahrzeugbewegung beschreibenden Größen nijmess, omegamess, aymess sowie deltamess. Weiterhin das Signal brems, sowie die Motorkenndaten motl. Ferner werden dem Block 203, sofern vorhanden, die im Block 202 erzeugten und korrigierten Signale aykorr sowie omegakorr zugeführt. Neben diesen Signalen erhält der Reglerkern 203 auch die vom Block 204, der Ansteuereinrichtung für die Aktuatoren, erzeugten Signale ST2, mit denen dem Reglerkern 203 beispielsweise der Zustand der Ansteuereinrichtung 204 mitgeteilt werden kann. In Abhängigkeit dieser Signale erzeugt der Reglerkern 203 die für die Regelung der die Fahrzeugbewegung repräsentierenden Bewegungsgröße erforderlichen Signale ST1, die der Ansteuereinrichtung 204, zugeführt werden.

Die Ansteuereinrichtung 204 setzt die ihr zugeführten Signale ST1 in Signale zur Ansteuerung der Aktuatoren 110ij bzw. zur Beeinflussung des Motors 111 um. So erzeugt sie beispielsweise die Signale Aij zur Ansteuerung der Aktuatoren 110ij, mit denen die auf die einzelnen Räder des Fahrzeugs wirkenden Bremsmomente beeinflußbar sind. Ebenso erzeugt die Ansteuereinrichtung 204 das Stellsignal mot2, mit dem das vom Motor 111 abgegebene Antriebsmoment beeinflußbar ist.

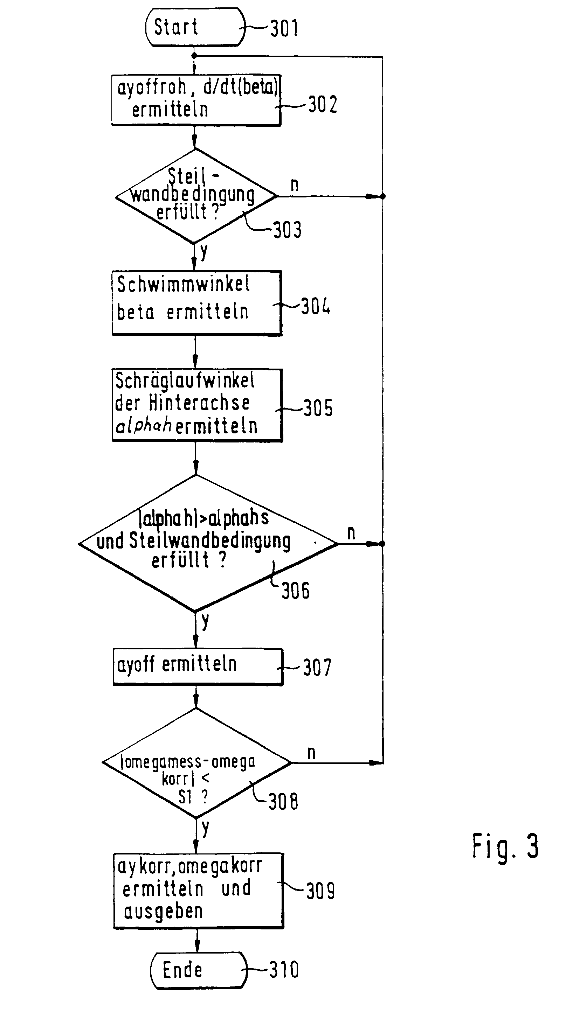

In Figur 3 ist mit Hilfe eines Flußdiagrammes das in der erfindungsgemäßen Vorrichtung wenigstens zur Ermittlung der von der Fahrbahnquerneigung abhängigen Querbeschleunigungskomponente ablaufende erfindungsgemäße Verfahren dargestellt.

Die Ermittlung der von der Fahrbahnquerneigung abhängigen Querbeschleunigungskomponente beginnt mit einem Schritt 301. Anschließend an den Schritt 301 wird der Schritt 302 ausgeführt. Im Schritt 302 werden ein Rohwert ayoffroh für die von der Fahrbahnquerneigung abhängige Querbeschleunigungskomponente ayoff und eine Schwimmwinkeländerung d(beta)/dt ermittelt. Der Rohwert ayoffroh für die Querbeschleunigungskomponente ayoff wird in Abhängigkeit der Längsgeschwindigkeit vl des Fahrzeugs, der mit dem Sensor 105 erfaßten Querbeschleunigung aymess des Fahrzeugs sowie der mit Hilfe des Sensors 104 erfaßten Gierrate omegamess des Fahrzeugs ermittelt. Die Schwimmwinkeländerung d(beta)/dt wird ebenfalls in Abhängigkeit dieser Größen ermittelt.

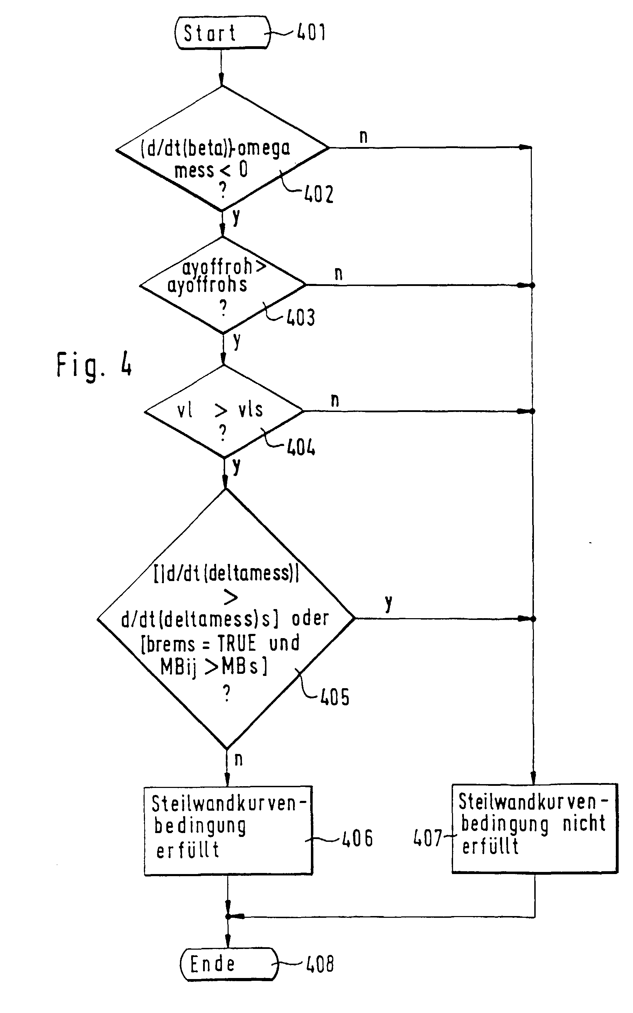

Anschließend an den Schritt 302 wird der Schritt 303 ausgeführt. In diesem Schritt wird überprüft, ob die Steilwandbedingung - wie die Steilwandbedingung definiert ist, wird im Zusammenhang mit der Figur 4 geklärt - erfüllt ist. Ist die Steilwandbedingung erfüllt - was in diesem Fall ein Anzeichen dafür ist, daß sich das Fahrzeug auf einer quergeneigten Fahrbahn befinden dürfte - so wird als nächstes der Schritt 304 ausgeführt. Ist die Steilwandbedingung dagegen nicht erfüllt, so wird zu Schritt 302 zurückgegangen.

Im Schritt 304 wird der im momentanen Fahrzeugzustand vorliegende Schwimmwinkel beta des Fahrzeugs ermittelt. Dies erfolgt vorzugsweise durch Integration der Schwimmwinkeländerung d(beta)/dt. Somit gehen in die Ermittlung des Schwimmwinkels die mit Hilfe des Sensors 105 erfaßte Querbeschleunigung aymess, die mit Hilfe des Sensors 104 erfaßte Gierrate omegamess und die Längsgeschwindigkeit vl des Fahrzeugs ein.

In diesem Zusammenhang ist zu erwähnen, daß es bei der Einfahrt des Fahrzeuges in eine Steilwand bzw. Steilkurve aufgrund der für die Ermittlung der korrigierten Querbeschleunigung benötigten Laufzeit, zu nicht erforderlichen fahrerunabhängigen Eingriffen beispielsweise an den Aktuatoren 110ij kommen kann. Mit diesen Eingriffen versucht das Regelungssystem, die die Fahrzeugbewegung repräsentierende Größe zu regeln, da aufgrund der zunächst noch nicht korrigierten Querbeschleunigung für das Regelungssystem ein unplausibler Fahrzeugzustand vorliegt. Um in diesem Fall das Korrekturverhalten der Vorrichtung bzw. des Verfahrens bzgl. der Querbeschleunigung dahingehend zu verbessern, daß in dieser Situation die Querbeschleunigung schneller den die Steilwand bzw. Steilkurve beschreibenden korrigierten Wert erreicht, bietet es sich an, im Schritt 304 eine Korrektur des ermittelten Wertes des Schwimmwinkels vorzunehmen. Hierbei wird der Wert des Schwimmwinkels in Abhängigkeit der fahrerunabhängig durchgeführten Eingriffe so erhöht, daß er mit steigender Anzahl der fahrerunabhängigen Eingriffe zunimmt. Dadurch sind weniger Rechenzyklen erforderlich, bis der oben beschriebene, korrigierte Wert der Querbeschleunigung erreicht wird.

Bei den berücksichtigten fahrerunabhängig durchgeführten Eingriffen kann es sich, wie bereits oben erwähnt, um Eingriffe an den Aktuatoren 110ij handeln, mit denen die auf die einzelnen Räder wirkenden Bremsmomente beeinflußbar sind. Zur Erfassung dieser Eingriffe werden beispielsweise die Signale ANij, die die Anzahl solcher, am jeweiligen Aktuator 110ij fahrerunabhängig durchgeführter Eingriffe repräsentieren, ausgewertet.

An den Schritt 304 schließt sich der Schritt 305 an. In diesem Schritt wird der an der Hinterachse des Fahrzeugs auftretende Schräglaufwinkel alphah sowohl in Abhängigkeit des im Schritt 304 ermittelten Schwimmwinkels beta, als auch in Abhängigkeit der erfaßten Werte für die Gierrate omegamess sowie der Längsgeschwindigkeit des Fahrzeugs vl ermittelt.

Nach dem Schritt 305 wird der Schritt 306 ausgeführt. In diesem Schritt wird abgefragt, ob der Betrag des ermittelten, an der Hinterachse des Fahrzeugs auftretenden Schräglaufwinkels alphah größer als ein vorgegebener Schwellwert alphas ist und ob die Steilwandbedingung erfüllt ist. Ist gleichzeitig der Betrag des Schräglaufwinkels alphah größer als der Schwellwert alphas und die Steilwandbedingung erfüllt, so wird als nächstes der Schritt 307 ausgeführt. Ist dagegen der Betrag des Schräglaufwinkels alphah kleiner als der Schwellwert und/oder die Steilwandbedingung nicht erfüllt, so wird zu Schritt 302 zurückgegangen.

Der Aufbau der im Schritt 306 durchgeführten Abfrage ergibt sich aus folgenden Gründen: Bei der Ermittlung des Schwimmwinkels wird der für die Querbeschleunigung des Fahrzeugs mit Hilfe des Sensors 105 erfaßte Wert aymess verwendet. Wenn sich das Fahrzeug auf einer quergeneigten Fahrbahn bewegt, so ist dieser Wert aymess durch die von der Fahrbahnquerneigung abhängige Querbeschleunigungskomponente verfälscht. Dies macht sich dadurch bemerkbar, daß eine Schwimmwinkeländerung d(beta)/dt auch dann ermittelt wird, wenn das Fahrzeug in einem stabilen Zustand auf einer quergeneigten Fahrbahn fährt, obwohl in solch einer Situation keine Schwimmwinkeländerung vorliegen dürfte. Folglich nimmt der ermittelte Schwimmwinkel beta kontinuierlich zu und nimmt deshalb große Werte an. Entsprechend nimmt der ermittelte, an der Hinterachse des Fahrzeugs auftretende Schräglaufwinkel ebenfalls große Werte an, da er in Abhängigkeit vom Schwimmwinkel ermittelt wird.

Dieselbe Situation - große Werte des an der Hinterachse des Fahrzeugs auftretenden Schräglaufwinkels - ergibt sich auch bei einem instabilen Fahrzustand des Fahrzeugs, insbesondere dann, wenn das Fahrzeug beispielsweise schleudert. Um nun unterscheiden zu können, ob sich das Fahrzeug auf einer quergeneigten Fahrbahn bewegt, oder ob sich das Fahrzeug in einem instabilen Zustand befindet, ist ein weiteres Kriterium erforderlich. Zu diesem Zweck wird die Steilwandbedingung mit betrachtet. In die Steilwandbedingung geht, wie anhand Figur 4 noch zu zeigen ist, die Reaktion bzw. das Verhalten des Fahrers ein. Zur Beobachtung der Reaktion bzw. des Verhaltens des Fahrers bietet es sich an, beispielsweise die vom Fahrer durchgeführte Lenkwinkeländerung d(deltamess)/dt und/oder beispielsweise die fahrerabhängige Betätigung der Aktuatoren 110ij zu beobachten.

Liegt eine stabile Fahrt auf einer quergeneigten Fahrbahn vor, so nimmt der ermittelte Schräglaufwinkel alphah zwar große Werte an, da sich aber das Fahrzeug in dieser Situation stabil verhält, wird der Fahrer keine Beeinflussung des Fahrzeugverhaltens durchführen. Das heißt, weder die fahrerabhängig mit den Aktuatoren 110ij erzeugten Bremsmomente noch die Lenkwinkeländerung d(deltamess)/dt werden große Werte annehmen. Liegt dagegen ein instabiler Zustand des Fahrzeugs vor, so wird im Normalfall der Fahrer versuchen, diesen instabilen Zustand auszugleichen. Hierzu wird er beispielsweise versuchen durch eine Lenkkorrektur bzw. durch Bremsen das Fahrzeug wieder zu stabilisieren. Folglich werden sich in dieser Situation merkliche Werte für die Lenkwinkeländerung d(deltamess)/dt oder für die von den Aktuatoren 110ij fahrerabhängig erzeugten Bremsmomente MBij feststellen lassen.

Die Fahrerreaktion geht in die Steilwandbedingung so ein, daß bei vorliegendem kleinen Gradienten d(deltamess)/dt des Lenkwinkels und bei kleinen, mit den Aktuatoren 110ij fahrerabhängig erzeugten Bremsmomenten MBij, die Steilwandbedingung erfüllt ist.

Folglich wird nach dem Schritt 306 dann der Schritt 307 ausgeführt, wenn das Fahrzeug stabil auf einer quergeneigten Fahrbahn fährt. Liegt diese Situation nicht vor, insbesondere schleudert das Fahrzeug, so wird nach dem Schritt 306 an den Schritt 302 zurückgegeben.

Im Schritt 307 wird die von der Fahrbahnquerneigung abhängige Querbeschleunigungskomponente ayoff ermittelt. Dies kann beispielsweise ausgehend von dem im Schritt 302 ermittelten Rohwert ayoffroh für die Querbeschleunigung, unter Verwendung einer Filterung erfolgen. Folglich wird die von der Fahrbahnquerneigung abhängige Querbeschleunigungskomponente in Abhängigkeit der Querbeschleunigung aymess, der Gierrate omegamess sowie der Längsgeschwindigkeit vl des Fahrzeugs ermittelt.

Im Anschluß an den Schritt 307 wird der Schritt 308 ausgeführt. In diesem Schritt wird die im Schritt 307 ermittelte Querbeschleunigungskomponente ayoff auf Plausibilität hin überprüft. Hierzu wird zunächst ausgehend von dieser Querbeschleunigungskomponente beispielsweise unter Verwendung eines mathematischen Modells ein korrigierter Wert omegakorr für die Gierrate des Fahrzeugs ermittelt. Dieser korrigierte Wert omegakorr wird mit dem mittels des Sensors 104 für die Gierrate des Fahrzeugs ermittelten Wert omegamess verglichen. Beispielsweise wird hierzu die Differenz der beiden Werte omegakorr bzw. omegamess ermittelt, und der Betrag dieser Differenz mit einem vorgegebenen Schwellwert S1 verglichen. Ist der Betrag der Differenz kleiner als der Schwellwert S1, was bedeutet, daß die ermittelte Querbeschleunigungskomponente ayoff plausibel ist, so wird als nächstes der Schritt 309 ausgeführt. Wird dagegen im Schritt 308 festgestellt, daß der Betrag der Differenz größer als der Schwellwert ist, und somit die ermittelte Querbeschleunigungskomponente ayoff offensichtlich nicht plausibel ist, so wird zum Schritt 302 zurückgegangen.

Im Schritt 309 werden, mit Hilfe der im Schritt 307 ermittelten, von der Fahrbahnquerneigung abhängigen Querbeschleunigungskomponente ayoff, wenigstens die korrigierten Werte aykorr für die Querbeschleunigung und omegakorr für die Gierrate des Fahrzeugs ermittelt bzw. ausgegeben. Ferner ist es denkbar, weitere Größen in Abhängigkeit der Querbeschleunigungskomponente ayoff zu korrigieren. So könnte beispielsweise auch der an der Hinterachse des Fahrzeugs auftretende Schräglaufwinkel alphah korrigiert werden.

Nach dem Schritt 309 wird der Schritt 310 ausgeführt, mit dem die Ermittlung der Querbeschleunigungskomponente ayoff bzw. die Korrektur der Querbeschleunigung des Fahrzeugs beendet wird.

Es sei noch bemerkt, daß die Ermittlung der Querbeschleunigungskomponente ayoff beispielsweise permanent, was die Regelung der die Fahrzeugbewegung repräsentierenden Größe angeht, im Hintergrund abläuft. Auch sei erwähnt, daß beispielsweise bei Fahrtbeginn, nach dem Drehen des Zündschlüssels, zunächst in einem Initialisierungsvorgang, wesentliche Größen auf einen geeigneten Initialisierungswert gesetzt werden.

Mit Hilfe des in Figur 4 dargestellten Flußdiagrammes wird die Steilwandabfrage, mit der festgestellt werden kann, ob die Steilwandbedingung erfüllt ist, beschrieben. Diese Steilwandabfrage wird, wie bereits im Zusammenhang mit Figur 3 gezeigt, bei der Ermittlung der von der Fahrbannquerneigung abhängigen Querbeschleunigungskomponente ayoff, in den Schritten 303 bzw. 306 eingesetzt.

Die Abfrage beginnt mit Schritt 401. Anschließend an diesen Schritt wird der Schritt 402 ausgeführt. In diesem Schritt wird überprüft, ob sich das Fahrzeug in einer Steilkurve bzw. Steilwand befindet. Die Abfrage wird beispielsweise dadurch realisiert, daß das aus der Schwimmwinkeländerung d(beta)/dt und der mit Hilfe des Sensors 104 erfaßten Gierrate omegamess gebildete Produkt überprüft wird. Diese Abfrage bietet sich deshalb an, weil sowohl für ein übersteuerndes Fahrzeug als auch für ein sich in einer Steilkurve bzw. Steilwand befindliches Fahrzeug, das Produkt aus der Schwimmwinkeländerung d(beta)/dt und der Gierrate omegamess kleiner Null ist. Folglich wird mit der im Schritt 402 stattfindenden Abfrage festgestellt, daß das Fahrzeug übersteuert und/oder daß sich das Fahrzeug in einer Steilkurve bzw. Steilwand befindet. Um allerdings feststellen zu können, in welchem der beiden Zustände sich das Fahrzeug letztlich befindet, sind weitere Abfragen erforderlich, auf die im Zusammenhang mit dem Schritt 405 eingegangen wird. Ist das oben beschriebene Produkt kleiner als Null so wird als nächstes der Schritt 403 ausgeführt. Ist dagegen das Produkt größer Null, so wird als nächstes der Schritt 407 ausgeführt.

Im Schritt 403 wird der im Schritt 302 ermittelte Rohwert ayoffroh der Querbeschleunigung mit einem vorgegebenen Schwellwert ayoffrohs verglichen. Ist der Rohwert ayoffroh größer als der Schwellwert ayoffrohs, so deutet dies darauf hin, daß sich das Fahrzeug auf einer quergeneigten Fahrbahn befindet. Deshalb wird in diesem Fall als nächstes der Schritt 404 ausgeführt. Wird dagegen im Schritt 403 festgestellt, daß der Rohwert ayoffroh kleiner als der Schwellwert ayoffrohs ist, so wird als nächstes der Schritt 407 ausgeführt, da sich das Fahrzeug offensichtlich nicht auf einer quergeneigten Fahrbahn befindet.

Im Schritt 404 wird überprüft, ob die Längsgeschwindigkeit vl des Fahrzeugs größer als der Wert vls einer Mindestlängsgeschwindigkeit ist. Die Längsgeschwindigkeit vl des Fahrzeugs sollte, um beispielsweise die von der Fahrbahnquerneigung abhängige Querbeschleunigungskomponente sicher ermitteln zu können, größer als der Wert vls der Mindestlängsgeschwindigkeit sein. Ist der Wert vl größer als der Wert vls, so wird als nächstes der Schritt 405 ausgeführt. Ist dagegen der Wert vl kleiner als der Wert vls, so wird als nächstes der Schritt 407 ausgeführt.

Im Schritt 405 wird die im Zusammenhang mit Figur 3 bereits erwähnte Überwachung des Verhaltens bzw. der Reaktion des Fahrers durchgeführt. Hierzu werden im Schritt 405 verschiedene Abfragen durchgeführt. Mit einer dieser Abfragen wird beispielsweise der vom Fahrer vorgegebene Gradient d(deltamess)/dt des Lenkwinkels überprüft. Mit einer zweiten Abfrage, die aus zwei Kriterien besteht, wird die fahrerabhängige Betätigung der Aktuatoren 110ij, anhand der mit den Aktuatoren 110ij erzeugten Bremsmomente MBij bzw. dem Signal brems überprüft.

Das Verhalten bzw. die Reaktion des Fahrers wird aus dem Grund überwacht, da sich im Zusammenhang mit dem ermittelten, an der Hinterachse des Fahrzeugs auftretenden Schräglaufwinkel feststellen läßt, ob sich das Fahrzeug in einem stabilen Zustand auf einer quergeneigten Fahrbahn befindet, oder ob es sich in einem instabilen Zustand befindet, insbesondere ob es schleudert.

Es ist davon auszugehen, daß in dem Fall, in dem sich das Fahrzeug in einer stabilen Fahrt auf einer quergeneigten Fahrbahn befindet, der Fahrer keine allzu heftigen Reaktionen in Form eines starken Lenkungseingriffes und/oder eines starken Bremseneingriffes zeigen wird. Befindet sich dagegen das Fahrzeug in einem instabilen Zustand, insbesondere schleudert es, so wird der Fahrer versuchen, durch entsprechend starke Lenkungs- bzw. Bremseneingriffe, das Fahrzeug wieder in einen stabilen Zustand zu bekommen.

Aus diesem Grund finden im Schritt 405 folgende Abfragen statt: In einer ersten Abfrage wird der Betrag des Gradienten d(deltamess)/dt des Lenkwinkels deltamess mit einem hierfür vorgegebenen Schwellwert (d(deltamess)/dt)s verglichen. Wird bei diesem Vergleich festgestellt, daß der Betrag des Gradienten größer ist als der Schwellwert, so kann davon ausgegangen werden, daß der Fahrer starke Lenkbewegungen ausführt, mit denen er versucht, das Fahrzeug in einen stabilen Zustand zu überführen.

In einer zweiten Abfrage wird die fahrerabhängige Beeinflussung der Aktuatoren 110ij überprüft. Mit Hilfe eines ersten Kriteriums wird festgestellt, ob die Betätigung der Aktuatoren 110ij vom Fahrer verursacht wird oder nicht. Die Betätigung der Aktuatoren 110ij ist dann auf einen Eingriff des Fahrers zurückzuführen, wenn das Signal brems beispielsweise den Wert TRUE annimmt. Mit einem zweiten Kriterium werden die von den Aktuatoren 110ij an den jeweiligen Rädern erzeugten bzw. die mit den Aktuatoren 110ij an den jeweiligen Rädern beeinflußten Bremsmomente MBij überwacht. Hierbei kann davon ausgegangen werden, daß der Fahrer starke Bremseingriffe vornimmt, wenn die Werte der Bremsmomente MBij größer als ein vorgegebener Schwellwert MBs sind.

Ist im Schritt 405 wenigstens eine der beiden Abfragen erfüllt, das heißt, ist der Betrag des Gradienten d(deltamess)/dt des Lenkwinkels größer als der Schwellwert (d(deltamess)/dt)s oder sind die mit den Aktuatoren 110ij erzeugten bzw. die durch die Aktuatoren 110ij beeinflußten Bremsmomente MBij für den Fall, daß das Signal brems den Wert TRUE aufweist, größer als der Schwellwert MBs, so kann davon ausgegangen werden, daß sich das Fahrzeug in keinem stabilen Zustand befindet. Folglich wird für diesen Fall, nach dem Schritt 405 der Schritt 407 ausgeführt. Sind dagegen beide Abfragen nicht erfüllt, so kann davon ausgegangen werden, daß sich das Fahrzeug in einem stabilen Zustand befindet, folglich wird im Anschluß an den Schritt 405 der Schritt 406 ausgeführt.

Es sei bemerkt, daß es hierbei durchaus denkbar ist, in diesem Zusammenhang auch die fahrerabhängige Beeinflussung des vom Motor 111 abgegebenen Antriebsmoments zu überwachen.

Im Schritt 406 wird beispielsweise einer im Block 202 verwendeten Variablen, die dazu dient, anzuzeigen, ob die Steilwandbedingung erfüllt ist oder nicht, solch ein Wert zugewiesen, ausgehend von dem feststellbar ist, daß die Steilwandbedingung erfüllt ist. Im Schritt 407 wird dagegen derselben Variablen solch ein Wert zugewiesen, ausgehend von dem feststellbar ist, daß die Steilwandbedingung nicht erfüllt ist. Diese Variable wird beispielsweise in den in Figur 3 gezeigten Schritten 303 bzw. 306 ausgewertet.

Sowohl im Anschluß an den Schritt 406 als auch im Anschluß an den Schritt 407, wird der Schritt 408 ausgeführt, mit dem die Steilwandabfrage beendet wird.

Die spezielle Ausgestaltung der beiden in den Figuren 3 bzw. 4 dargestellten Flußdiagramme soll keine einschränkende Wirkung auf die erfindungswesentliche Idee darstellen.

## Patentansprüche

1. Vorrichtung zur Regelung einer die Fahrzeugbewegung repräsentierenden Bewegungsgröße,
die erste Mittel (103ij, 104, 105, 106, 111, 113) zur Erfassung von die Fahrzeugbewegung beschreibenden Größen enthält, mit denen wenigstens eine die Querbeschleunigung des Fahrzeugs beschreibende Größe erfaßbar ist,
die zweite Mittel (202) enthält, mit denen eine von der Fahrbahnquerneigung abhängige Querbeschleunigungskomponente wenigstens ermittelt wird (302, 307) und/oder mit denen wenigstens die erfaßte Querbeschleunigung des Fahrzeugs wenigstens in Abhängigkeit der Querbeschleunigungskomponente korrigiert wird (309),
dadurch gekennzeichnet, daß
in den zweiten Mitteln (202) wenigstens der an der Hinterachse des Fahrzeugs auftretende Schräglaufwinkel ermittelt wird (305),
daß wenigstens in Abhängigkeit dieses Schräglaufwinkels ein Fahrzeugzustand feststellbar ist (306), bei dem die von der Fahrbahnquerneigung abhängige Querbeschleunigungskomponente ermittelt wird (307), und
daß die ermittelte Querbeschleunigungskomponente auf Plausibilität hin überprüft wird (308).

2. Vorrichtung nach Anspruch 1, dadurch gekennzeichnet,
daß mit den ersten Mitteln (103ij, 104, 105, 106, 111, 113) ferner die Gierrate des Fahrzeugs sowie die Radgeschwindigkeiten beschreibende Größen erfaßbar sind, wobei wenigstens ausgehend von den erfaßten Radgeschwindigkeiten eine die Längsgeschwindigkeit des Fahrzeugs repräsentierende Größe ermittelt wird.

3. Vorrichtung nach Anspruch 2, dadurch gekennzeichnet,
daß in den zweiten Mitteln (202) die von der Fahrbahnquerneigung abhängige Querbeschleunigungskomponente wenigstens in Abhängigkeit der ermittelten Werte für die Gierrate des Fahrzeugs, für die Querbeschleunigung des Fahrzeugs sowie für die Längsgeschwindigkeit des Fahrzeugs ermittelt wird (302, 307).

4. Vorrichtung nach Anspruch 2, dadurch gekennzeichnet,
daß in den zweiten Mitteln (202) der an der Hinterachse des Fahrzeugs auftretende Schräglaufwinkel wenigstens in Abhängigkeit eines für den Schwimmwinkel des Fahrzeugs ermittelten Wertes (304), sowie der ermittelten Werte für die Gierrate des Fahrzeugs und die Längsgeschwindigkeit des Fahrzeugs ermittelt wird (305).

5. Vorrichtung nach Anspruch 4, dadurch gekennzeichnet,
daß in den zweiten Mitteln (202) der Schwimmwinkel des Fahrzeugs wenigstens ausgehend von den ermittelten Werten für die Gierrate des Fahrzeugs, für die Querbeschleunigung des Fahrzeugs sowie für die Längsgeschwindigkeit des Fahrzeugs ermittelt wird (304).

6. Vorrichtung nach Anspruch 5, dadurch gekennzeichnet,
daß das Fahrzeug Aktuatoren (110ij) wenigstens zur Beeinflussung der auf einzelne Räder des Fahrzeugs wirkenden Bremsmomente enthält, und
daß in den zweiten Mitteln (202) bei der Ermittlung des Schwimmwinkels des Fahrzeugs (304) ferner Eingriffe dieser Aktuatoren mitberücksichtigt werden, die für die Regelung der die Fahrzeugbewegung repräsentierenden Größe fahrerunabhängig durchgeführt werden.

7. Vorrichtung nach Anspruch 1, dadurch gekennzeichnet,
daß in den zweiten Mitteln (202) der Fahrzeugzustand in Abhängigkeit des an der Hinterachse des Fahrzeugs auftretenden Schräglaufwinkels durch einen Vergleich des an der Hinterachse des Fahrzeugs auftretenden Schräglaufwinkels mit einem vorgegebenen Schwellwert festgestellt wird (306),
wobei der Fahrzeugzustand dann vorliegt, wenn der Wert des an der Hinterachse des Fahrzeugs auftretenden Schräglaufwinkels größer als der Schwellwert ist.

8. Vorrichtung nach Anspruch 1, dadurch gekennzeichnet,
daß das Fahrzeug ferner Aktuatoren (110ij) wenigstens zur Beeinflussung der auf einzelne Räder des Fahrzeugs wirkenden Bremsmomente enthält,
daß mit den ersten Mitteln (103ij, 104, 105, 106, 111, 113) ferner eine den Lenkwinkel des Fahrzeugs beschreibende Größe erfaßbar ist, und
daß in den zweiten Mitteln (202) zur Feststellung des Fahrzeugzustandes ferner wenigstens eine Überwachung dieser Aktuatoren und/oder des Lenkwinkels stattfindet (303, 306, 405), mit der feststellbar ist, ob vom Fahrer des Fahrzeugs Eingriffe durchgeführt werden,
wobei der Fahrzeugzustand in Abhängigkeit dieser Überwachung dann vorliegt, wenn die vom Fahrer erzeugten Bremsmomente kleiner als ein vorgegebener Schwellwert sind und der Gradient des Lenkwinkels kleiner als ein vorgegebener Schwellwert ist.

9. Vorrichtung nach Anspruch 2, dadurch gekennzeichnet,
daß bei der in den zweiten Mitteln (202) stattfindenden Plausibilitätsabfrage (308) eine Differenz aus einem ersten Wert für die Gierrate des Fahrzeuges, der ausgehend von der ermittelten Querbeschleunigungskomponente ermittelt wird, und einem zweiten Wert für die Gierrate des Fahrzeuges, der ausgehend von den ersten Mitteln ermittelt wird, gebildet und mit einem vorgegebenen Schwellwert verglichen wird, und
daß die Korrektur wenigstens der Querbeschleunigung des Fahrzeugs (309) dann durchgeführt wird, wenn bei der Plausibilitätsabfrage festgestellt wird, daß die Differenz kleiner als der vorgegebene Schwellwert ist.

10. Verfahren zur Regelung einer die Fahrzeugbewegung repräsentierenden Bewegungsgröße,
bei dem wenigstens eine die Querbeschleunigung des Fahrzeugs beschreibende Größe ermittelt wird,
bei dem eine von der Fahrbahnquerneigung abhängige Querbeschleunigungskomponente wenigstens ermittelt (302, 307) und/oder wenigstens die ermittelte Querbeschleunigung des Fahrzeugs wenigstens in Abhängigkeit der Querbeschleunigungskomponente korrigiert wird (309),
dadurch gekennzeichnet,
daß wenigstens der an der Hinterachse des Fahrzeugs auftretende Schräglaufwinkel ermittelt wird (305),
daß wenigstens in Abhängigkeit dieses Schräglaufwinkels ein Fahrzeugzustand feststellbar ist (306), bei dem die von der Fahrbahnquerneigung abhängige Querbeschleunigungskomponente ermittelt wird (307), und
daß die ermittelte Querbeschleunigungskomponente auf Plausibilität hin überprüft wird (308).

## Claims

1. Apparatus for controlling a movement variable which represents the vehicle movement,
which contains first means (103ij, 104, 105, 106, 111, 113) for detecting variables which describe the vehicle movement and by means of which at least one variable can be detected which describes the transverse acceleration of the vehicle,
which contains second means (202) by means of which a transverse acceleration component which is dependent on the roadway transverse camber is at least determined (302, 307) and/or by means of which at least the detected transverse acceleration of the vehicle is corrected at least as a function of the transverse acceleration component (309),
characterized in that
at least the slip angle which occurs on the rear axle of the vehicle is determined (305) in the second means (202),
in that a vehicle state can be established (306), at least as a function of this slip angle, in which the transverse acceleration component which is dependent on the roadway transverse camber is determined (307), and in that the determined transverse acceleration component is checked (308) for plausibility.

2. Apparatus according to Claim 1, characterized
in that variables which describe the yaw rate of the vehicle and the wheel speeds can also be detected by the first means (103ij, 104, 105, 106, 111, 113), in which case a variable which represents the longitudinal speed of the vehicle is determined at least on the basis of the detected wheel speeds.

3. Apparatus according to Claim 2, characterized
in that the transverse acceleration component which is dependent on the roadway transverse camber is determined in the second means (202), at least as a function of the determined values for the yaw rate of the vehicle, for the transverse acceleration of the vehicle and for the longitudinal speed of the vehicle (302, 307).

4. Apparatus according to Claim 2, characterized
in that the slip angle which occurs on the rear axle of the vehicle is determined in the second means (202), at least as a function of a value determined for the sideslip angle of the vehicle (304) and of the values determined for the yaw rate of the vehicle and the longitudinal speed of the vehicle (305)

5. Apparatus according to Claim 4, characterized
in that the sideslip angle of the vehicle is determined in the second means (202), at least on the basis of the values determined for the yaw rate of the vehicle, for the transverse acceleration of the vehicle and for the longitudinal speed of the vehicle (304).

6. Apparatus according to Claim 5, characterized
in that the vehicle contains actuators (110ij) for influencing at least the braking torques acting on individual wheels of the vehicle, and
in that, when determining the sideslip angle of the vehicle (304) in the second means (202), actions of these actuators are also taken into account which are carried out independently of the driver for controlling the variable which represents the vehicle movement.

7. Apparatus according to Claim 1, characterized
in that the vehicle state is established in the second means (202) as a function of the slip angle which occurs on the rear axle of the vehicle, by comparing the slip angle which occurs on the rear axle of the vehicle with a predetermined threshold value (306), with the vehicle state being present when the value of the slip angle which occurs on the rear axle of the vehicle is greater than the threshold value.

8. Apparatus according to Claim 1, characterized
in that the vehicle furthermore contains actuators (110ij) to influence at least the braking torques acting on individual wheels of the vehicle,
in that a variable which describes the steering angle of the vehicle can be detected by the first means (103ij, 104, 105, 106, 111, 113), and
in that, furthermore, these actuators and/or the steering angle are at least monitored (303, 306, 405) in the second means (202) in order to establish the vehicle state, which monitoring is used to establish whether the driver of the vehicle has carried out any actions,
with the vehicle state being present as a function of this monitoring when the braking torques produced by the driver are less than a predetermined threshold value and the gradient of the steering angle is less than a predetermined threshold value.

9. Apparatus according to Claim 2, characterized
in that, in the plausibility check (308) which is carried out in the second means (202), a difference is formed between a first value for the yaw rate of the vehicle, which is determined on the basis of the determined transverse acceleration component, and a second value for the yaw rate of the vehicle, which is determined on the basis of the first means, and this difference is compared with a predetermined threshold value, and
in that at least the transverse acceleration of the vehicle (309) is corrected if the plausibility check establishes that the difference is less than the predetermined threshold value.

10. Method for controlling a movement variable which represents the vehicle movement,
in which at least one variable is determined which describes the transverse acceleration of the vehicle,
in which a transverse acceleration component which is dependent on the roadway transverse camber is at least determined (302, 307) and/or at least the determined transverse acceleration of the vehicle is corrected (309) at least as a function of the transverse acceleration component,
characterized
in that at least the slip angle which occurs on the rear axle of the vehicle is determined (305),
in that a vehicle state can be establishd (306), at least as a function of this slip angle, in which the transverse acceleration component which is dependent on the roadway transverse camber is determined (307), and
in that the determined transverse acceleration component is checked (308) for plausibility.

## Revendications

1. Dispositif pour réguler une grandeur de mouvement représentant le mouvement du véhicule, qui comprend :
- des premiers moyens (103ij, 104, 105, 106, 111, 113) pour saisir des grandeurs décrivant le mouvement du véhicule et à l'aide desquelles on peut saisir au moins l'une des grandeurs décrivant l'accélération transversale du véhicule,
- des seconds moyens (202) à l'aide desquels on détermine au moins une composante d'accélération transversale dépendant de l'inclinaison transversale de la chaussée, et/ou avec lesquels on corrige au moins l'accélération transversale saisie du véhicule, au moins en fonction de la composante d'accélération transversale (309)
caractérisé en ce que
- dans les seconds moyens (202) on détermine (305) au moins l'angle de dérive qui se produit au niveau de l'essieu arrière du véhicule,
- au moins en fonction de cet angle de dérive, on peut fixer (306) un état du véhicule pour lequel on détermine (307) la composante d'accélération transversale dépendante de l'inclinaison transversale de la chaussée et
- on vérifie (308) la plausibilité des composantes d'accélération transversale ainsi obtenues.

2. Dispositif selon la revendication 1,
caractérisé en ce qu'
avec les premiers moyens (103ij, 104, 105, 106, 111, 113) on saisit en outre des grandeurs décrivant la vitesse de giration du véhicule ainsi que sa vitesse de roues et partant des vitesses de roues détectées, on détermine au moins une grandeur représentant la vitesse longitudinale du véhicule.

3. Dispositif selon la revendication 2,
caractérisé en ce que
dans les seconds moyens (202) on détermine (302, 307) la composante d'accélération transversale dépendante de l'inclinaison de la chaussée du véhicule, au moins en fonction des valeurs obtenues pour la vitesse de giration du véhicule, pour l'accélération transversale de celui-ci ainsi que pour sa vitesse longitudinale.

4. Dispositif selon la revendication 2,
caractérisé en ce que
dans les seconds moyens (202) on détermine l'angle de dérive qui se produit au niveau de l'essieu arrière du véhicule, au moins en fonction d'une valeur (304) déterminée pour l'angle d'inclinaison du véhicule, et les valeurs (305) obtenues pour les vitesses de giration du véhicule et la vitesse longitudinale de celui-ci.

5. Dispositif selon la revendication 4,
caractérisé en ce que
dans les seconds moyens (202) on détermine (304) l'angle d'inclinaison du véhicule au moins en partant des valeurs obtenues pour la vitesse de giration du véhicule, pour l'accélération transversale de celui-ci et pour la vitesse longitudinale du véhicule.

6. Dispositif selon la revendication 5,
caractérisé en ce que
le véhicule comporte des actionneurs (110ij) au moins pour influencer les couples de freins agissant sur les différentes roues du véhicule, et
dans les seconds moyens (202), en déterminant l'angle d'inclinaison du véhicule (304), on tient en outre compte des interventions de ces actionneurs pour exécuter la régulation des grandeurs représentant les mouvements du véhicule, et cela indépendamment du conducteur.

7. Dispositif selon la revendication 1,
caractérisé en ce que
dans les seconds moyens (202) on fixe (306) l'état du véhicule en fonction de l'angle de dérive au niveau de l'essieu arrière du véhicule par comparaison de l'angle de dérive de l'essieu arrière du véhicule et d'un seuil prédéterminé, l'état du véhicule étant fourni si la valeur de l'angle de dérive produit au niveau de l'essieu arrière du véhicule est supérieur au seuil.

8. Dispositif selon la revendication 1,
caractérisé en ce que
- le véhicule comporte en outre des actionneurs (110ij) au moins pour influencer le couple de freinage agissant sur différentes roues du véhicule,
des premiers moyens (103ij, 104, 105, 106, 111, 113) pouvant en outre saisir une grandeur décrivant l'angle de braquage du véhicule et
- dans les seconds moyens (202), pour déterminer l'état du véhicule, on effectue en outre au moins une surveillance des actionneurs et/ou de l'angle de braquage (303, 306, 405) pour déterminer si le conducteur du véhicule a effectué des interventions,
- l'état du véhicule existe en fonction de cette surveillance si les couples de freins générés par le conducteur sont inférieurs à un seuil prédéterminé et si le gradient de l'angle de braquage est inférieur à un seuil prédéterminé.

9. Dispositif selon la revendication 2,
caractérisé en ce que
- pour l'interrogation de plausibilité (308) exécutée dans les seconds moyens (202) on forme une différence entre une première valeur de la vitesse de giration du véhicule obtenue à partir de la composante d'accélération transversale calculée et une seconde valeur de la vitesse de giration du véhicule obtenue à partir des premiers moyens, et on compare cette différence à un seuil prédéterminé, et
- on corrige en plus vite au moins l'accélération transversale du véhicule (309) si on constate, lors d'une interrogation de plausibilité, que la différence est inférieure au seuil prédéterminé.

10. Procédé de régulation d'une grandeur de mouvement représentant le mouvement du véhicule, selon lequel
- on détermine au moins une grandeur décrivant l'accélération transversale du véhicule,
- on détermine (302, 307) au moins une composante d'accélération transversale dépendante de l'inclinaison de la chaussée, et/ou au moins l'accélération transversale déterminée du véhicule (309) est corrigée au moins en fonction de la composante d'accélération transversale,
caractérisé en ce que
- on détermine (305) au moins l'angle de dérive produit au niveau de l'essieu arrière du véhicule,
- au moins en fonction de cet angle de dérive, on peut déterminer un état du véhicule (306), pour lequel on détermine (307) la composante d'accélération transversale dépendante de l'inclinaison transversale de la chaussée, et
- on vérifie (308) la plausibilité de la composante d'accélération transversale obtenue.
